# EUROPEAN PATENT APPLICATION

(11) **EP 1 684 469 A1**
(43) Date of publication of application: **26.07.2006**
(21) Application number: 06001096.4
(22) Date of filing: 19.01.2006
(51) Int. Cl.: H04L 12/46, H04L 12/56

(54) **Apparatus and method for providing multiprotocol label switching (MPLS) based virtual private network (VPN)**

(30) Priority: 24.01.2005 KR 2005006401
(71) Applicant: Samsung Electronics Co., Ltd., Suwon-si, Gyeonggi-Do (KR)
(72) Inventor: Lee, Ki-Cheol, Gumi-dong Bundang-gu Seongnam-si (KR); Nam, Kee-Sung, Gangnam-gu Seoul (KR)
(74) Representative: Lang, Johannes

(57) **Abstract**

A virtual private network (VPN) based on a multi protocol label switching (MPLS) technique is established by an MPLS-based VPN providing apparatus and method. The MPLS-based VPN providing apparatus and method are capable of simplifying the use of protocols, reducing a load, and guaranteeing quality of service (QoS) by adopting a centralized control structure.

## Description

### BACKGROUND OF THE INVENTION

### 1. Technical Field

The present invention relates to an apparatus and method for providing a multi protocol label switching (MPLS)-based virtual private network (VPN), and more particularly, to an apparatus and method for providing an MPLS-based VPN which is capable of simplifying the use of complex protocols between network components.

### 2. Related Art

A virtual private network (VPN) provides a broadband private line service at low cost, and creates a private link in a public network, such as the Internet. This generally allows a shared network to act as a private link using encryption and tunneling techniques. The VPN is relatively easy to implement in an asynchronous transfer mode (ATM) network, a frame relay network, or the like because such a network is capable of establishing a virtual line which provides private bandwidth and path control to customers. In the VPN, traffic is encrypted by a sender and sent via a virtual circuit.

In the VPN, it is difficult to ensure bandwidth and Quality of Service (QoS). Methods have been developed to solve this problem by introducing an MPLS technique. VPNs based on the MPLS technique include a layer-2 VPN, a layer-3 VPN, and the like. VPNs based on the MPLS technique will be described.
In a border gateway protocol (BGP)/MPLS-based layer-3 VPN, a path is computed using an IP routing protocol, and then a tunnel label switched path (LSP) is established between core networks composed of an MPLS edge switch (MES) (referred to as a provider edge (PE) router)/an MPLS core switch (MCS) (referred to as a provider (P) router) using an MPLS signaling protocol, such as a constraint routed label distribution protocol or constraint-based routing/label distribution protocol (CR-LDP), resource reservation protocol-traffic engineering (RSVP-TE), or the like. Each MES adopts a VPN configuration.
The BGP/MPLS-based layer-3 VPN is required to use complex IP routing and MPLS signaling protocols in order to establish a VPN tunnel LSP since it uses a distributed control structure. The BGP/MPLS-based layer-3 VPN also requires a complex MP-BGP routing protocol for virtual connection (VC) label allocation and VPN routing information delivery. Accordingly, an MES/MCS is difficult to implement. Furthermore, the MES/MCS is greatly burdened with a pre-control function for traffic transmission rather than an MES/MCS traffic transmission function due to a complex protocol stack. Furthermore, the use of a distributed control structure makes it difficult for the BGP/MPLS-based layer-3 VPN to guarantee LSP QoS. These problems arise in all MPLS-based VPNs, as well as the BGP/MPLS-based layer-3 VPN.
Accordingly, there is a need for an apparatus and method for providing an MPLS-based VPN capable of solving the aforementioned problems.

### SUMMARY OF THE INVENTION

Accordingly, it is an object of the present invention to provide an apparatus and method for providing a multi protocol label switching (MPLS)-based virtual private network (VPN) which is capable of simplifying the use of complex IP routing and MPLS signaling protocols to create a tunnel label switched path (LSP) in a VPN which uses MPLS.
It is another object of the present invention to provide an apparatus and method for providing an MPLS-based VPN which is capable of simplifying the use of a complex routing protocol for virtual connection (VC) label allocation and VPN routing information delivery in the MPLS-based VPN.
It is still another object of the present invention to provide an apparatus and method for providing an MPLS-based VPN which is capable of reducing load in the MPLS-based VPN.
It is yet another object of the present invention to provide an apparatus and method for providing an MPLS-based VPN which is capable of easily guaranteeing LSP QoS.
According to an aspect of the present invention, an apparatus for providing a multi protocol label switching (MPLS)-based virtual private network (VPN) in a network which includes at least one MPLS switch comprises: a label switched path (LSP) management unit for storing MPLS LSP information of the network; a connection admission unit that receives and processes a VPN establishment request message from an operator; a topology/resource collection unit for collecting Internet protocol (IP) prefix information of a customer edge (CE) included in the VPN, the establishment of which is requested by an MPLS edge switch (MES) within the MPLS switch, and for creating a VPN topology table; and an LSP computation unit for creating a VPN LSP for the VPN, the establishment of which is requested, by referring to the stored LSP information of the MPLS network and the created VPN topology table.
According to another aspect of the present invention, a method for providing an MPLS-based VPN in a network which includes at least one MPLS switch comprises: receiving a VPN establishment request message from an operator; assigning a VPN identifier to the VPN, the establishment of which is requested, and transmitting it to an MES of the MPLS switch; receiving IP prefix information of a customer edge (CE) included in the VPN from the MES; creating a VPN topology table using the received IP prefix information; and creating a VPN LSP for the VPN, the establishment of which is requested, by referring to the created VPN topology table and pre-established MPLS LSP information of the network.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, in which like reference symbols indicate the same or similar components, wherein:
FIG. 1 is a diagram of a border gateway protocol/multi protocol label switching (BGP/MPLS)-based layer-3 VPN network;
FIG. 2 is a diagram of an MPLS-based layer-3 VPN network having a centralized control structure;
FIG. 3 is a block diagram of an apparatus for providing a VPN according to the present invention;
FIG. 4 illustrates communication between customer edges (CEs) in an MPLS-based layer-3 VPN having a centralized control structure according to an embodiment of the present invention; and
FIG. 5 illustrates communication between customer edges (CEs) in an MPLS-based layer-3 VPN having a centralized control structure according to another embodiment of the present invention.

### DETAILED DESCRIPTION OF THE INVENTION

The present invention will now be described more fully with reference to the accompanying drawings, in which preferred embodiments of the invention are shown. This invention may, however, be embodied in different forms and should not be construed as being limited to the embodiments set forth herein. Rather, these embodiments are provided so that this disclosure will be thorough and complete, and will fully convey the concept of the invention to those skilled in the art.

The present invention described below relates to an apparatus and method for providing a virtual private network (VPN) based on multi protocol label switching (MPLS) having a centralized control structure. The present invention is capable of minimizing the use of complex IP routing and MPLS signaling protocols in creating a tunnel label switched path (LSP), a complex routing protocol for virtual connection (VC) label allocation and VPN routing information delivery, and the like, reducing a load, and easily guaranteeing LSP QoS by adopting a centralized control structure.

Hereinafter, the present invention will be described by way of example in connection with a BGP/MPLS-based layer-3 VPN which has been generally used as a current MPLS-based VPN.

A centralized control MPLS-based VPN according to the present invention will be described with reference to the accompanying drawings.

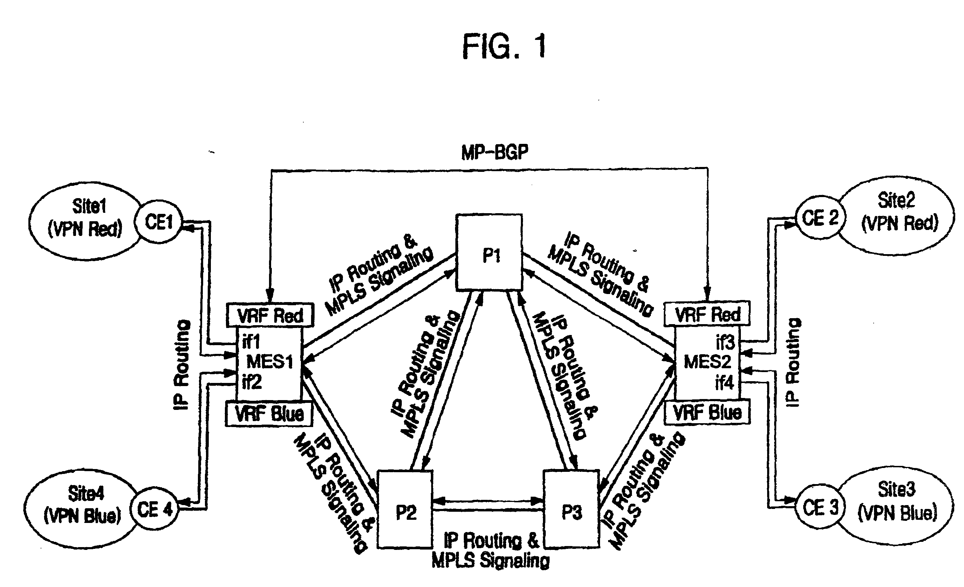

FIG. 1 is a diagram of a border gateway protocol/multi protocol label switching (BGP/MPLS)-based layer-3 VPN network.

In a BGP/MPLS-based layer-3 VPN, a path is computed using an IP routing protocol, and then a tunnel label switched path (LSP) is established between core networks composed of an MPLS edge switch (MES) (referred to as a provider edge (PE) router)/an MPLS core switch (MCS) (referred to as a provider (P) router) using an MPLS signaling protocol, such as a constraint routed label distribution protocol or constraint-based routing/label distribution protocol (CR-LDP), resource reservation protocol-traffic engineering (RSVP-TE), or the like. Each MES adopts a VPN configuration. Referring to FIG. 1, for example, MES 1 may adopt the VPN configuration in the form of if1-VPN Red and if2-VPN Blue, and MES2 may adopt the VPN configuration in the form of if3-VPN Red and if4-VPN Blue. Each MES receives lower IP prefix information through an IP routing protocol, and creates an MPLS forwarding table and a VPN routing and forwarding (VRF) table. Referring to FIG. 1, for example, each MES creates VRF Red and VRF Blue. An egress MES of the LSP then transmits VPN routing information and a VC label value to an ingress MES using a multi-protocol BGP (MP-BGP). The ingress MES completes the VRF table using the received VPN routing information and VC label value. After completing the VRF table, the MES transmits the VPN routing information to customer edge (CE) routers. The CE routers may then produce MPLS packets and communicate with other CE routers.

The BGP/MPLS-based layer-3 VPN shown in FIG. 1 is required to use complex IP routing and MPLS signaling protocols in order to establish a VPN tunnel LSP since it uses a distributed control structure. The BGP/MPLS-based layer-3 VPN also requires a complex MP-BGP routing protocol for virtual connection (VC) label allocation and VPN routing information delivery. Accordingly, a respective MES/MCS is difficult to implement. Furthermore, the MES/MCS is greatly burdened with a pre-control function for traffic transmission rather than an MES/MCS traffic transmission function due to a complex protocol stack. In addition, the use of a distributed control structure makes it difficult for the BGP/MPLS-based layer-3 VPN to guarantee LSP QoS. These problems arise in all MPLS-based VPNs, as well as in the BGP/MPLS-based layer-3 VPN.

Accordingly, there is a need for an apparatus and method for providing an MPLS-based VPN capable of solving the aforementioned problems.

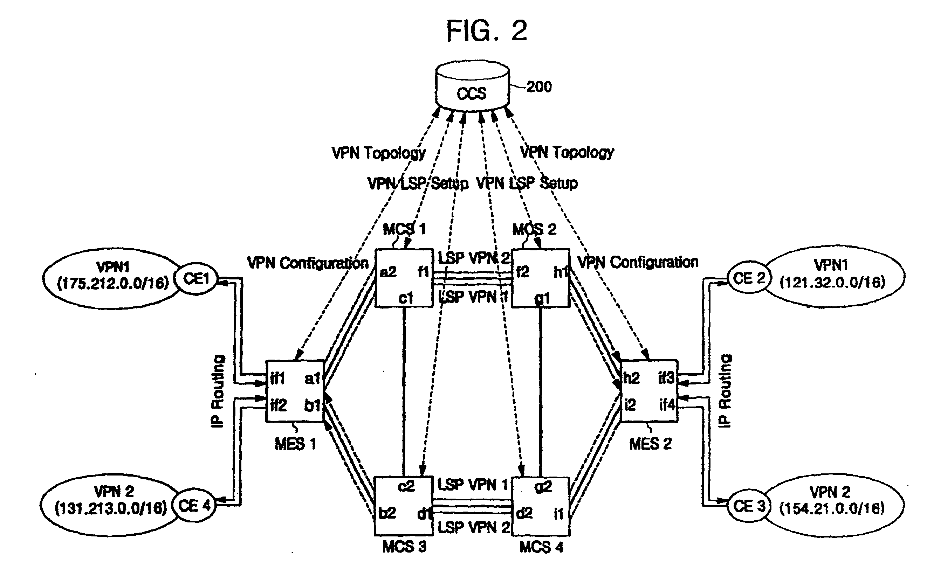

FIG. 2 is a diagram of an MPLS-based layer-3 VPN network adopting a centralized control structure.

As shown in FIG. 2, the VPN network according to the present invention is composed of a VPN providing apparatus, i.e., a centralized control system; (CCS) 200, for controlling and managing the network in a centralized control structure, an MPLS edge switch (MES) for mapping data such as input IP packets to a label switched path (LSP) or delivering MPLS packets from an upstream MPLS core switch (MCS) to a downstream customer edge (CE) router connected to the MPLS edge switch, and an MCS for switching MPLS packets. The MES is positioned at an edge of the MPLS network for mapping input data to the LSP, and the MCS is positioned inside the MES for switching the delivered MPLS packets. The MES and the MCS may be simply called an "MPLS switch". The term "MPLS switch" will be used hereinafter unless it is necessary to distinguish between the MES and the MCS.

In the present invention, the MPLS switches collect topology information and resource information for LSP calculation. The MPLS switches only collect the topology information and resource information, and do not perform LSP calculation, which makes it possible to simplify their structure compared to existing MPLS switches. The MPLS switches are able to collect the topology information and resource information through "hello" message transmission and reception with neighboring MPLS switches. The MPLS switches which collect the topology information and resource information will be described in detail later. LSP calculation in a centralized control MPLS network, as in the present invention, is performed in the VPN providing apparatus or CCS 200 rather than by MPLS switches.

The VPN providing apparatus or CCS 200 will be now described with reference to the accompanying drawings.

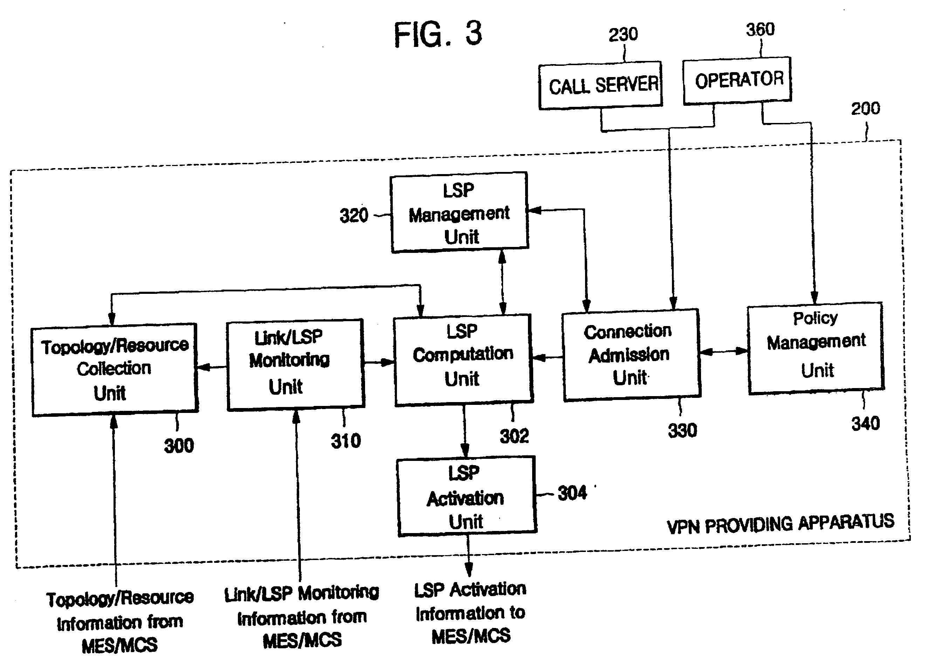

FIG. 3 is a block diagram of an apparatus for providing a VPN according to the present invention.

The VPN providing apparatus 200 of FIG. 3 is connected to the MES/MCS, and functions to create and manage the MPLS-based layer-3 VPN. The VPN providing apparatus 200 may be composed of: a topology/resource collection unit 300 which produces and manages topology and resource information for the MPLS network and VPN routing information; a connection admission unit 330 for receiving and handling a request for layer-3 VPN establishment from an operator; a policy management unit 340 for managing a policy for VPN establishment; an LSP computation unit 302 for creating a VPN LSP; an LSP management unit 320 for managing the created VPN LSP; an LSP activation unit 304 for delivering VPN routing information and VPN LSP information to respective MES/MCS, and for activating the VPN; and a link/LSP monitoring unit 310 for managing a state of the created LSP.

The creation and management of VPN LSP is based on the MPLS LSP established on the MPLS network shown in FIG. 2. Accordingly, MPLS LSP creation and management will be described prior to describing the VPN LSP creation and management for VPN provision.

The topology/resource collection unit 300 collects topology information and resource information of a centralized control MPLS network according to the present invention. The topology/resource collection unit 300 receives the topology information and resource information from the respective MPLS switches, thereby collecting the topology information and resource information. In this case, the MPLS switches transmit information about connection states between other neighboring MPLS switches to the topology/resource collection unit 300. The MPLS switches are able to confirm the topology information and resource information through "hello" message transmission and reception with neighboring MPLS switches. A detailed description of the collection of the topology information and resource information using the "hello" message will be omitted.

The VPN providing apparatus 200 creates a topology/resource table, and then calculates the LSP based on the topology/resource table and a policy defined by a network operator 360. The LSP calculation is performed by the LSP computation unit 302 in the VPN providing apparatus 200. The LSP computation unit 302 may use a constraint-based shortest path first (CSPF) algorithm to compute the LSP.

The policy stored in the policy management unit 340 may be reflected in the LSP calculation. In this case, the LSP computation unit 300 calculates to LSP so that the LSP satisfies the policy.

The LSP calculated by the LSP computation unit 302 is set in each MPLS switch by the LSP activation unit 304. The VPN providing apparatus 200 completing the LSP calculation for all connections transmits the calculation LSP information to the LSP activation unit 304. The LSP activation unit 304 performs an LSP activation procedure so as to transmit the LSP information set in each MPLS switch. Information transmitted to the MPLS switches as part of the LSP activation procedure includes forward equivalence classes (FEC) information, lower interface topology information, class-to-EXP mapping information, label forwarding information base (LFIB) information, and the like.

In the latter regard, the FEC information indicates a group of packets transmitted according to the same policy, the lower interface topology information indicates information about devices, such as CEs, that are connected to the MPLS network via MES, and the class-to-EXP mapping information indicates DiffServ code point (DSCP) to MPLS EXP mapping information, 802.1p class to MPLS EXP mapping information, or the like. The LFIB information indicates MPLS label switching information that should be processed by the respective MPLS switches, and may include information such as an input label, an output label, an output interface, and the like.

The VPN providing apparatus 200 further includes LSP management unit 320 which manages states of the established LSPs. The LSP Management unit 320 stores information about the calculated and established LSPs, and then manages MPLS network operation. The LSP information stored in the LSP Management unit 320 is used in operations, administration and maintenance (OAM) of an MPLS network, as will be discussed later.

The MPLS network may perform an MPLS OAM function to detect performance and failure information of the LSP. Using the MPLS OAM function, the MPLS network detects significant deterioration of the performance of the LSP and failure of the LSP, removes an unavailable LSP, computes a new LSP, or performs a restore function by using a substitute LSP instead of an unavailable LSP. The MPLS OAM function may also be performed by the VPN providing apparatus 200.

The link/LSP monitoring unit 310 of the VPN providing apparatus 200 manages the performance and failure of the MPLS network link and the established LSP. The management of the MPLS network link and the LSP may also be performed using the "hello" message.

For the management of the MPLS network link and the LSP, the respective MPLS switches continue to check topology/resource through the "hello" message, even after the topology/resource is checked upon initial network operation. When there is a change in the topology or resource, the MPLS switch notifies the VPN providing apparatus 200 of the change so that the VPN providing apparatus 200 updates the topology/resource table.

To monitor the link through the "hello" message, for example, the MPLS switch determines that there is failure of the link when it does not receive the "hello" message within a "hello" dead interval, and transmits a signal to the VPN providing apparatus 200 to report the failure. This failure signal is transmitted to the LSP monitoring unit 310 of the VPN providing apparatus 200, and includes at least information about a failed link.

The LSP monitoring unit 310, receiving the failure signal, transmits the information about the link with the failure signal to the topology/resource collection unit 300, and the topology/resource collection unit 300 updates the topology/resource table with the received information. The LSP monitoring unit 310 also notifies the LSP computation unit 302 of the link failure so that the LSP computation unit 302 performs a protection/restoration function in the LSP on the failed link.

In the present invention, the VPN providing apparatus 200 further includes a connection admission unit 330 which admits or refuses a request for connection from the outside. The connection admission unit 330 is connected to an external operator 360 or an external call server 230. An external service is connected to the MPLS network via the MES, but the connection admission unit 330 in the VPN providing apparatus 200 determines whether to admit or refuse the service.

When the connection admission unit 330 receives a request for service connection from the operator 360, the call server (e.g., a soft switch) 230, or the like, it determines whether there is an LSP and bandwidth available for the requested service by referring to the LSP management unit 320. When there is an available LSP and bandwidth, the connection admission unit 330 performs a control function so that service data input to the MES is mapped to the corresponding LSP. If there is no available LSP or bandwidth, the connection admission unit 330 requests the LSP computation unit 302 to establish a new LSP and, in response to the request, the LSP computation unit 302 calculates a new LSP which can accommodate the service. If there is no LSP able to support the requested service and a new LSP cannot be established, the LSP computation unit 302 notifies the correspondent requesting the service that the service is unavailable.

In the present invention, the VPN providing apparatus 200 further includes a policy management unit 340 responsible for LSP establishment and management policy. The policy management unit 340 receives the LSP establishment and management policy for the MPLS network from the operator 360, and applies the policy to the operation of the LSP computation unit 302 or the connection admission unit 330.

The creation and management of the MPLS LSP have been described so far. The centralized control MPLS network and the MPLS LSP establishment in the centralized control MPLS network are described in detail in Korean Patent Application No. 10-2004-0109024, entitled "Centralized control system and method in MPLS Network". The creation and management of the VPN LSP based on the created MPLS LSP information will be now described with reference to FIGS. 2 and 3.

A user (not shown) requesting a layer-3 VPN transmits a VPN establishment request message to the operator 360, and in response, the operator 360 transmits an establishment request message, including VPN establishment information, to the connection admission unit 330 of the VPN providing apparatus 200. The VPN establishment request information contained in the VPN establishment request message may include VPN establishment sites, VPN establishment LSP class, LSP bandwidth, performance conditions, and the like. The VPN providing apparatus 200 receiving the VPN establishment request message assigns a VPN ID to the request layer-3 VPN, and transmits the assigned VPN ID to the respective MESs. In FIG. 2, the VPN providing apparatus 200, which has received two layer-3 VPN request messages from the operator 360, sets VPN 1 (VPN ID=1000) and VPN 2 (VPN ID=2000) as IDs in the respective requested VPNs, and transmits VPN configuration information to the MES. When the connection admission unit 330 receives the VPN establishment request message from the operator 360, it is able to determine whether there are resources in the MPLS network to provide the VPN, establishment of which is requested, by referring to the LSP management unit 320. Accordingly, the present invention enables easy QoS guarantee through the centralized control system.

When the MES receives the VPN configuration information from the VPN providing apparatus 200, it establishes the VPN on an interface-by-interface basis, as in Table 1. Table 1 shows an example of the layer-3 VPN configurations set in MES 1 and MES2 of FIG. 2.

**<Table 1>**

| | | |
|---|---|---|
| MES1 | VPN 1000 | if1 |
| | VPN 2000 | if2 |
| MES2 | VPN 1000 | if3 |
| | VPN 2000 | if4 |

In the case where the layer-3 VPN is set as in Table 1, the MES 1 recognizes packets input via if1 as packets corresponding to the VPN 1000 and packets input via if2 as packets corresponding to the VPN 2000. Furthermore, the MES2 recognizes packets input via if3 as packets corresponding to VPN 1000 and packets input via if4 as packets corresponding to the VPN 2000.

The respective MESs collect IP prefix information belonging to the VPN from the CEs through the IP routing protocol. Referring to FIG. 2, for example, the MES1 collects IP prefix information of 175.212.0.0/16 corresponding to the VPN 1000 from the CE1, and IP prefix information of 131.213.0.0/16 belonging to the VPN 2000 from the CE4. The MES2 collects IP prefix information of 121.32.0.0/16 belonging to the VPN 1000 from CE2, and IP prefix information of 154.21.0.0/16 belonging to the VPN 2000 from the CE3. Each MES transmits the collected IP prefix information corresponding to the VPN to the topology/resource collection unit 300 of the VPN providing apparatus 200. The topology/resource collection unit 300 of the VPN providing apparatus 200 creates a VPN topology table, such as Table 2, based on the received VPN IP prefix information from each MES. Each time the IP prefix information belonging to the VPN is changed, each MES notifies the VPN providing apparatus 200 of the changed information, and the VPN providing apparatus 200 modifies and updates the VPN topology table based on the received changed information from each MES. Table 2 shows an example of the VPN topology table created by the VPN providing apparatus 200. As described previously, in the present invention, the routing protocol is used only upon the MES collecting the IP prefix from the CE, thereby simplifying the use of the protocol.

**<Table 2>**

| MES ID | CE ID | VPN ID | IP Subnet |
|---|---|---|---|
| MES1 | CE 1 | VPN 1000 | 175.212.0.0/16 |
| | CE 4 | VPN 2000 | 131.213.0.0/16 |
| MES2 | CE 2 | VPN 2000 | 121.32.0.0/16 |
| | CE 3 | VPN 2000 | 154.21.0.0/16 |

After creating the VPN topology table, the topology/resource collection unit 300 requests the LSP computation unit 302 to set the LSP for the VPN 1000 and the VPN 2000 in order to create an LSP between sites for which a connection request is admitted. In this case, the LSP computation unit 302 establishes the VPN LSP based on the LSP information of the MPLS network, which is stored in the LSP management unit 320. The LSP computation unit 302 creates the VC a tunnel LSP for the connection requested VPN, and then creates the LSP table. In this case, a tunnel LSP may be established and a VC LSP may be mapped to the tunnel LSP by creating the VC LSP. Meanwhile, the LSP computation unit 302 may refer to the policy stored in the policy management unit 340 upon creating the LSP.

Tables 3 and 4 show examples of LSP tables for the VPN 1000 and the VPN 2000, respectively, calculated and created by the LSP computation unit 302. Table 3 shows an example of the LSP table which the VPN providing apparatus 200 creates for the VPN 1000, and Table 4 shows an example of the LSP table which the VPN providing apparatus 200 creates for the VPN 2000. Of course, the LSP tables may be created in various other forms. For example, in Tables 3 and 4, an incoming interface is omitted but may be added according to a label allocation protocol. In Tables 3 and 4, respective VC and tunnel label values are arbitrarily set to assist in understanding the present invention. The label values are assigned by the LSP computation unit 302, and set layer-3 VPN LSP information is transmitted to and managed by the LSP management unit 320.

**<Table 3>**

| VPN ID | Destination CE ID | Node ID | Incoming Tunnel Label | Incoming VC Label | Outgoing Interface | Outgoing Tunnel Label | Outgoing VC Label |
|---|---|---|---|---|---|---|---|
| 1000 | CE 2 | MES1 | - | - | a1 | 100 | 25 |
| | | MCS1 | 100 | 25 | f1 | 200 | 25 |
| | | MCS2 | 200 | 25 | h1 | pop | 25 |
| | | MES2 | - | 25 | if3 | - | - |
| | CE 1 | MES2 | - | - | i2 | 300 | 35 |
| | | MCS 4 | 300 | 35 | d2 | 400 | 35 |
| | | MCS 3 | 400 | 35 | b2 | pop | 35 |
| | | MES1 | - | 35 | if1 | - | - |

**<Table 4>**

| VPN ID | Destination CE ID | Node ID | Incoming Tunnel Label | Incoming VC Label | Outgoing Interface | Outgoing Tunnel Label | Outgoing VC Label |
|---|---|---|---|---|---|---|---|
| 2000 | CE 3 | MES1 | - | - | a1 | 100 | 45 |
| | | MCS1 | 100 | 45 | f1 | 200 | 45 |
| | | MCS2 | 200 | 45 | h1 | pop | 45 |
| | | MES2 | - | 45 | if4 | - | - |
| | CE 4 | MES2 | - | - | i2 | 300 | 55 |
| | | MCS 4 | 300 | 55 | d2 | 400 | 55 |
| | | MCS 3 | 400 | 55 | b2 | pop | 55 |
| | | MES 1 | - | 55 | if2 | - | - |

The LSP computation unit 302 transmits the set LSP information, etc. to the LSP activation unit 304, and the LSP activation unit 304 transmits LSP activation information such as LSP information, VPN topology information, EXP field mapping information, and the like to the respective MPLS switches. The respective MPLS switches receiving the LSP activation information from the VPN providing apparatus 200 are able to operate the VPN 1000 LSP and the VPN 2000 LSP, as in FIG. 2, through LSP activation. Further, the MESs receiving LSP-related information from the VPN providing apparatus 200 create a VRF table based on the received information, and map input IP packets to a corresponding LSP using the created VRF table. Table 5 shows an example of VPN topology information which the VPN providing apparatus 200 transmits to the MESs in FIG. 2. Based on the information, the MESs are able to map the input IP packet to the LSP.

Table 6 shows EXP field mapping information which the VPN providing apparatus 200 transmits to the MESs. Table 6 shows an example in which IP packets input to the MES are based on DiffServ. However, 802.1p based EXP field mapping and EXP field mapping based on an IP flow using 5-tuple (source IP address, destination IP address, protocol ID, source port, destination port) are also possible. Furthermore, class mapping together with the EXP field mapping are also possible. This is for establishing several classes of LSPs, and then performing mapping to the LSP belonging to the corresponding class according to an EXP field. The EXP field mapping table in Table 6 is for illustration, may be created in various forms at the operator's discretion, and is then transmitted to respective nodes by the VPN providing apparatus 200.

**<Table 5>**

| VPN ID | CE ID | CE 1 | CE 2 |
|---|---|---|---|
| 1000 | IP Subnet | 175.212.0.0/1 6 | 121.32.0.0/16 |
| | ID of connected MES | MES1 | MES2 |
| VPN ID | CE ID | CE 4 | CE 3 |
| 2000 | IP Subnet | 131.213.0.0/1 6 | 153.21.0.0/16 |
| | ID of connected MES | MES1 | MES2 |

**<Table 6>**

| DSCP | EXP | Class ID |
|---|---|---|
| EF | EXP0 | Gold |
| AF11 | EXP1 | Silver |
| AF12 | EXP2 | Silver |
| AF21 | EXP3 | Silver |
| AF22 | EXP4 | Silver |
| AF31 | EXP5 | Silver |
| AF32 | EXP6 | Silver |
| BE | EXP7 | Bronze |

Tables 7 and 8 show examples of label forwarding information base (LFIB) tables which the VPN providing apparatus 200 transmits to the MES1 and the MES2, respectively. Table 7 shows an example of the LFIB table for the VPN 1000 and the VPN 2000 which the VPN providing apparatus 200 transmits to the MES1, and Table 8 is an example of the LFIB table for the VPN 1000 and the VPN 2000 which the VPN providing apparatus 200 transmits to the MES2. The respective MESs may create the VRF table based on the tables, and may produce and transmit MPLS packets. The LFIB table is also shown for illustration, and may be defined and created in various forms by the operator.

**<Table 7>**

| VPN ID | Destination CE ID | Incoming Interface | Incoming VC Label | Outgoing Interface | Outgoing VC Label | Outgoing Tunnel Label |
|---|---|---|---|---|---|---|
| 1000 | CE2 | if1 | - | al | 25 | 100 |
| | CE1 | b1 | 35 | if1 | - | - |
| 2000 | CE3 | if2 | - | al | 45 | 100 |
| | CE4 | b1 | 55 | if2 | - | - |

**<Table 8>**

| VPN ID | Destination CE ID | Incoming Interface | Incoming VC Label | Outgoing Interface | Outgoing VC Label | Outgoing Tunnel Label |
|---|---|---|---|---|---|---|
| 1000 | CE1 | if3 | - | i2 | 35 | 300 |
| | CE2 | h2 | 25 | if3 | - | - |
| 2000 | CE4 | if4 | - | i2 | 55 | 300 |
| | CE4 | h2 | 45 | if4 | - | - |

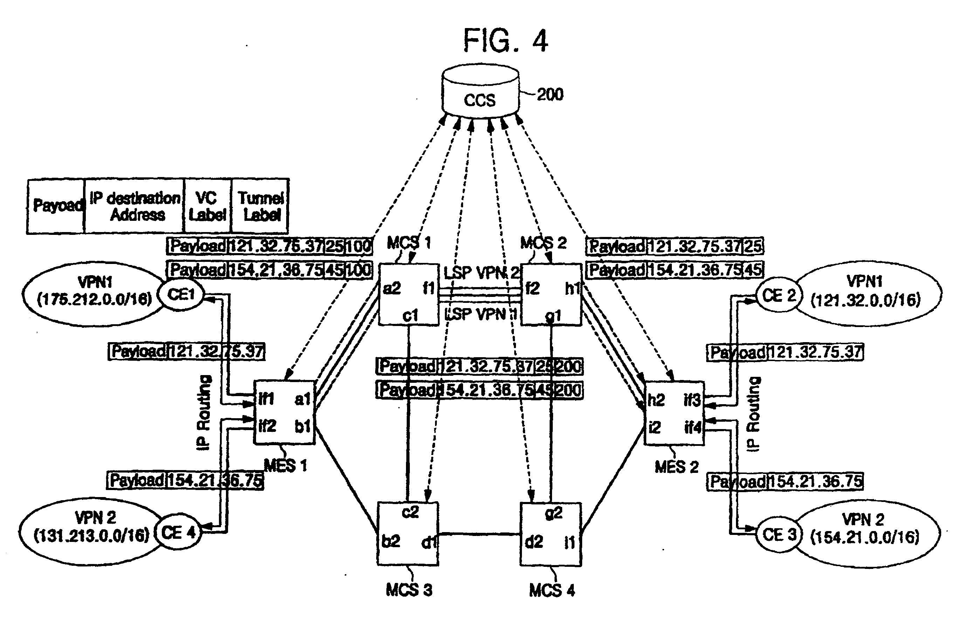

As described above, if the respective MES/MCSs receive LSP activation information for the VPN 1000 and the VPN 2000 from the VPN providing apparatus 200, they activate the set LSPs for the L3 VPN and perform transmission and reception of VPN IP packets. This will be described with reference to FIG. 4.

FIG. 4 illustrates communication between customer edges (CEs) in an MPLS-based layer-3 VPN having a centralized control structure according to an embodiment of the present invention.

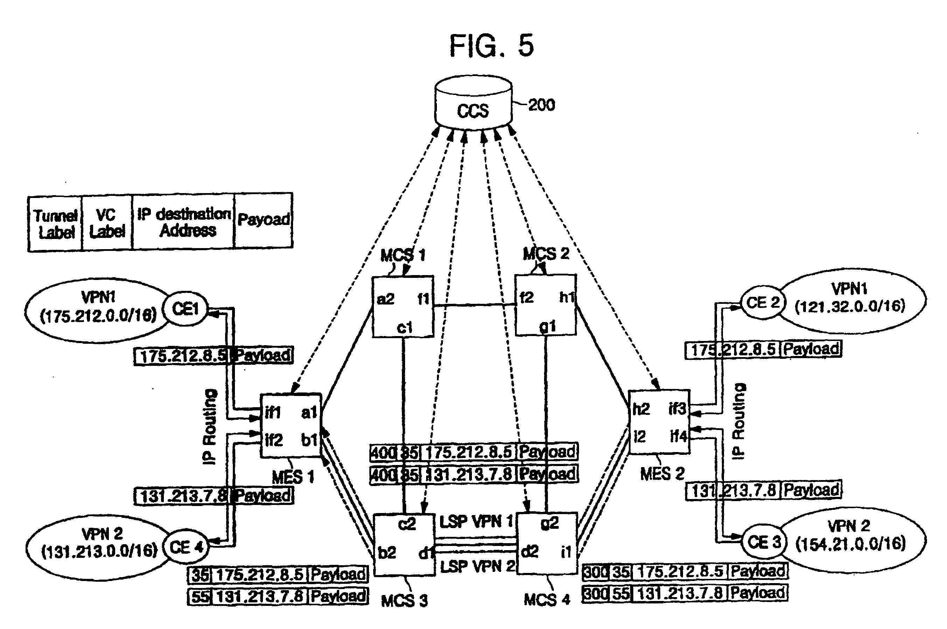

When the MES1 receives an IP packet having a destination IP address of 121.32.75.37 from the CE1, it checks an interface at which the IP packet is input to confirm that the IP packet is included in the VPN 1000. Then, the MES1 confirms that a destination host of the IP packet arrives via the CE2 connected to the MES2 by referring to the VPN topology table of Table 5 received from the VPN providing apparatus 200. The MES 1 also creates the MPLS packet by referring to the LFIB table of Table 7, and then transmits the packet to the MCS 1. In this case, the MPLS packet in FIG. 4 shows only a tunnel label, a VC label, an IP destination address, and a payload. However, the MES 1 may perform EXP field mapping shown in Table 6 by referring to the DiffServ Code Point (DSCP) value within the IP packet, as well as the LFIB table upon creation of the MPLS packet. The MCS 1 receiving the MPLS packet from the MES1 maps a tunnel label 100 to 200, and transmits the MPLS packet to the MCS2. The MCS2 receives the MPLS packet from the MCS1, pops a tunnel label of the received MPLS packet, and then transmits the MPLS packet to the MES2. The MES2 confirms that the MPLS packet corresponds to the VPN 1000 through the VC label value of the received MPLS packet, pops the VC label by referring to the LFIB table of Table 8, and then transmits the IP packet to the CE2. The CE2 receiving the IP packet transmits the IP packet to the corresponding host through an IP forwarding process. In the case of the VPN 2000, it is also possible to transmit and receive IP packets through the same processes described above. Packet transmission in the opposite direction is similar to the above operation, which is shown in FIG. 5.

FIG. 5 illustrates communication between customer edges (CEs) in an MPLS-based layer-3 VPN having a centralized control structure according to another embodiment of the present invention. FIG. 5 can be understood by referring to the description of FIG. 4, and thus a detailed description is omitted.

The present invention is directed to providing an MPLS-based VPN. It is possible to easily provide MPLS-based VPN service without using a routing protocol and a signaling protocol by creating and managing an LSP in a centralized control structure. Furthermore, a complex protocol stack is not used, making it possible to simplify the configuration of the MPLS switch and the implementation of the MPLS switch. In addition, it is possible to guarantee QoS of the VPN, and to easily manage the VPN service by creating and managing the VPN LSP in a centralized control structure.

While the present invention has been described with reference to exemplary embodiments thereof, it will be understood by those skilled in the art that various changes in form and detail may be made therein without departing from the scope of the present invention as defined by the following claims.

## Claims

1. An apparatus for providing a multi protocol label switching (MPLS)-based virtual private network (VPN) in a network including at least one MPLS switch, the apparatus comprising:
a label switched path (LSP) management unit for storing MPLS label switched path (LSP) information of the network;
a connection admission unit for receiving and processing a VPN establishment request message from an operator;
a topology/resource collection unit for collecting IP prefix information of a customer edge (CE) included in the VPN, the establishment of which is requested, from an MPLS edge switch (MES) within said at least one MPLS switch, and for creating a VPN topology table; and
an LSP computation unit for creating a VPN LSP for the VPN, the establishment of which is requested, by referring to the stored MPLS LSP information of the network and the created VPN topology table.

2. The apparatus according to claim 1, wherein the VPN establishment request message received by the connection admission unit comprises VPN establishment request information for VPN establishment.

3. The apparatus according to claim 2, wherein the VPN establishment request information comprises at least one of a VPN establishment site, a VPN establishment LSP class, an LSP bandwidth, and performance conditions.

4. The apparatus according to claim 1, wherein the connection admission unit is responsive to reception of the VPN establishment request message for assigning a VPN identifier to the VPN, the establishment of which is requested, and for transmitting it to the MES.

5. The apparatus according to claim 4, wherein the connection admission unit transmits VPN configuration information, including the VPN identifier and establishment information for the VPN, to the MES.

6. The apparatus according to claim 1, wherein the IP prefix information which the topology/resource collection unit collects from the MES comprises information which the MES collects using an Internet protocol (IP) routing protocol.

7. The apparatus according to claim 1, further comprising a policy management unit for storing an operation policy of the network.

8. The apparatus according to claim 7, wherein the LSP computation unit creates the VPN LSP by referring to the stored MPLS LSP information stored by the LSP management unit, the created VPN topology table, the policy stored by the policy management unit, and information included in the VPN establishment request message.

9. The apparatus according to claim 1, further comprising an LSP activation unit for transmitting, to the MPLS switch, information about the VPN LSP created by the LSP computation unit.

10. The apparatus according to claim 9, wherein the LSP activation unit transmits VPN topology information, EXP field mapping information, and label forwarding information base (LFIB) information to the MES, and transmits the LFIB information to an MPLS core switch (MCS) of the MPLS switch.

11. The apparatus according to claim 1, wherein the connection admission unit determines whether there are sufficient resources in the network to provide the VPN, the establishment of which is requested, and determines whether to admit the VPN establishment request based on sufficiency of resources in the network.

12. The apparatus according to claim 11, wherein the LSP management unit stores network establishment information and resource information which the connection admission unit refers to in determining whether there are sufficient resources in the network.

13. The apparatus according to claim 1, wherein the LSP management unit stores information relative to the VPN LSP created by the topology/resource collection unit.

14. A method for providing a multi protocol label switching (MPLS)-based virtual private network (VPN) in a network including at least one MPLS switch, the method comprising the steps of:
receiving a VPN establishment request message from an operator;
assigning a VPN identifier to the VPN, the establishment of which is requested, and transmitting it to an MPLS edge switch (MES) of said at least one MPLS switch;
receiving, from the MES, IP prefix information of a customer edge (CE) included in the VPN;
creating a VPN topology table using the received IP prefix information; and
creating a VPN label switched path (LSP) for the VPN, the establishment of which is requested, by referring to the created VPN topology table and preset MPLS LSP information of the network.

15. The method according to claim 14, further comprising the step of transmitting information about the created VPN LSP to said at least one MPLS switch.

16. The method according to claim 14, wherein the received VPN establishment request message comprises VPN establishment request information for VPN establishment.

17. The method according to claim 16, wherein the VPN establishment request information comprises at least one of a VPN establishment site, a VPN establishment LSP class, an LSP bandwidth, and performance conditions.

18. The method according to claim 14, wherein the IP prefix information received from the MES comprises information which the MES collects using an Internet protocol (IP) routing protocol.

19. The method according to claim 14, wherein the step of creating the VPN LSP is performed by referring to the created VPN topology table, policy stored in a policy management unit, and information included in the VPN establishment request message.
